# EUROPEAN PATENT APPLICATION

(11) **EP 1 720 336 A1**
(43) Date of publication of application: **08.11.2006**
(21) Application number: 06252351.9
(22) Date of filing: 03.05.2006
(51) Int. Cl.: H04N 1/00

(54) **Camera**

(30) Priority: 06.05.2005 HK 05103836
(71) Applicant: Chan, Yet, Wanchai (HK)
(72) Inventor: Chan, Yet, Wanchai, Hong Kong (HK); Wu, Wai Ip, Wanchai, Hong Kong (HK)
(74) Representative: Howe, Steven

(57) **Abstract**

A digital camera (3) is provided with a memory (14) for storing image data has a proprietary connection for use with a dedicated download device (30), but is free of any connection interface for connecting to a computer or other storage media, which interfaces (32, 34) are provided in the download device (30).

## Description

The present invention relates to a digital camera, to systems comprising a digital camera, associated downloading device and camera reactivation devices and to methods of image downloading and camera reactivation incorporating a verification technique.

Digital photography has transformed the way people take photographs and what they do with them. The ability to see a photograph just taken, and to choose to keep or reject it is an extremely powerful function. Having images in digital form gives the user the freedom to choose whether to obtain hard copies by printing, or to store these electronically for later viewing on a computer, and allows the user the possibility to send to friends and family by email, post to a website, as well as making the photographs available for a host of digital image processing techniques.

Digital cameras are however relatively complex devices, particularly when compared to simple point and shoot conventional film cameras, and are therefore expensive, being beyond the affordability of many, even in today's increasingly affluent society.

Moreover, even if someone owns a digital camera there are occasions in which the user finds themselves without their camera and wishing to take photographs, such as when travelling. In conventional photography cameras commonly referred to as "single use" or disposable cameras are well accepted by the public due to their low cost and convenience. They are especially popular at events such as parties, weddings or other functions, where they can be given to guests as gifts.

The present invention seeks to provide a digital camera, and an associated device affords many of the benefits of a "single-use" type camera, and which allows the camera to be provided at a very low price to a purchaser.

### Summary of the Invention

According to a first aspect of the invention there is provided a digital camera comprising memory means for storing image data and connection means for connection of the camera to a download device for downloading the image data from the memory means, wherein the camera is free of any connection interface allowing connection to external computing means or computer peripheral device.

A conventional connection interface on a digital camera allows connection of the camera to external computing means, such as a PC, or to an external storage device, or other computer peripheral device such as a printer. The most widely used interface, the universal serial bus (USB), uses a port having contacts for data lines and power lines, as well as associated circuitry, for example circuitry which provides voltage stabilization on the data lines. By removing this interface from the camera for downloading of image data or including only an incomplete interface, the camera may be used only with the download device. It is intended that the download device will be available only to certain processing facilities such as so-called mini-labs, whereby the user of the camera must take the camera to the mini-lab for picture downloading. Subsequent to downloading the camera is then returned by the mini-lab usually to the manufacturer for checking, reconditioning, re-packing and reactivation, as discussed further below.

Preferably, the connection means for connection between the camera and download device is a non-standard dedicated connection, which may be distinguished from the standard connections by the pin/socket layout and/or other physical dimensions of the connection.

In a further aspect the invention resides in a digital camera as defined above in combination with a separate download device to which the camera is connectable through said connection means, the download device comprising connection interface means whereby the download device can be connected to external computing means or computer peripheral device. The interface means on the download device includes a connecting port of a standard configuration, such as a USB port including at least two data line connections and two power connections. Such interface further includes voltage stabilization circuit, employing for example an impendence matching technique. The interface may also include a stabilized power supply function for the power connections.

The download device may include a detection circuit to detect the integrity of electrical connection within the connection means between the camera and download device. This may include visual indicating means, such as an LED, to indicate to a user that proper electrical connection is made. The device may further include user-operable switching means connected to the data lines to connect said lines to allow data transfer. The download device may further include a data flow detection circuit to detect the presence of data-carrying signals on the data lines which may also have second visual indicating means, indicating to a user the presence of data-carrying signals on the data lines.

It is important for the effective operation of the business model whereby cameras are supplied close to or even below cost price to the end user, that a high rate of return of cameras to the manufacturer be assured. As part of this it is desirable to tie the end user to a particular processing entity, which may be where the camera was purchased, or one commercially related thereto, such as a particular chain of retail photo-processing outlets.

In a further development with this in mind, the download device further comprises verification means adapted to verify whether the camera is authorized to be used with the download device, such as a verification circuit which on interconnection with said camera receives an identification signal from the camera. This circuit enables the download device on receipt of a valid identification signal. The identification signal may be as simple a signal voltage level on one signal pin, but alternatively may include signals on more than one pin with the verification circuit provided with one or more logic gates adapted to receive the identification signal and output an activating signal or voltage when the identification signal satisfies the criteria of the logic gates. Equally an analogue identification might be used, for example a voltage detection circuit to output an activating signal or voltage on the identification signal having a voltage lying within a predefined range. In a more complex arrangement the identification signal may comprise an identification code stored in the camera, the download device including stored authorized codes with which the identification code is compared.

The download device is preferably adapted to provide data relating to download events, and further comprises transmission means to transmit said data to a remote control centre. Such data may comprise one or more of time and/or date of download, camera identification information, and download device identification information. The provision of said data to a separate control center, which may be provided at or controlled by the manufacturer, is important for monitoring download events and camera returns, for the purpose of maximizing the rate of return of cameras.

The download device may be specifically adapted to directly send this data to the control center by telephone line, for example including a modem with the data sent as data packets, or using a standard messaging technique such as SMS, or an encoded technique such as dual tone multi-frequency (DTMF) encoding. Alternatively, the data may sent wirelessly, with the download device incorporating a GSM engine and associated hardware.

In the preferred embodiment the camera includes in its control programming the presence of an activating code or program for camera functioning, which code or program is erased on image downloading, thereby deactivating the camera after download and preventing further use by the end user. Camera reactivation is effected using a dedicated camera reactivating device connectable to the camera through said connection means, for transmitting a camera-reactivating code or program to the camera. This preferably includes interface means allowing connection to external computing means from which a reactivating program or code is transmitted, such as a USB interface. It is important that the reactivating device is used only by an authorized user and to reactivate only specific cameras, for example mini-labs of a particular commercial undertaking might be authorized to only reactivate cameras which that entity had originally sold. For this purpose the reactivating device further comprises means to verify that the device is authorized to be used with the camera.

In a further aspect the invention resides in a digital camera system including a digital camera and having camera identification means, and a dedicated download device comprising verification means adapted to verify whether the camera is authorized to be used with the download device.

In a still further aspect the invention resides in a download device for connection to a digital camera for the downloading of image data therefrom, the download device including camera verification means for receiving an identification code or signal from a camera and verifying whether the device is authorized to download images from a camera connected thereto.

In a still further aspect the invention resides in reactivation device for connection to a digital camera for the uploading of a reactivating code or programs to the camera and where the camera includes an identification means, the device further comprising verification means for verifying whether the device is authorized to be used with a camera connected thereto.

In a still further aspect the invention resides in a method of downloading images from a digital camera using a dedicated download device, the camera including a signal or code identification, the method comprising the steps of i) connecting the camera and download device; ii) receiving the identification code or signal in the download device and enabling download of image data only if the identification code or signal meets a predefined criteria indicative of an authorized combination of camera and device.

In a still further aspect the invention resides in a method of reactivating a digital camera, which camera includes an activating code or program essential for camera functioning and includes an identification signal or code, the method comprising the steps of i) connecting the camera to a dedicated reactivating device; ii) receiving the identification code or signal in the reactivating device and enabling the upload of a reactivating code or program only if the identification code or signal meets a predefined criteria indicative of an authorized combination of camera and reactivating device.

### Brief Description of the Drawings

Embodiments of the invention will now be described, by way of example, with reference to the following drawings in which:
Figure 1 is a schematic diagram of the components of a conventional digital camera;
Figure 2 is a system overview of a camera of the invention, and associated download device and computer for use therewith;
Figure 3 is a perspective external view of the camera when fitted in a download device;
Figure 4 is a more detailed schematic diagram of the digital camera and download device of the invention;
Figure 5 is a schematic view of the digital camera and a reactivating device;
Figure 6 is a circuit diagram showing the download device;
Figure 7 is a schematic diagram of a second embodiment of the camera and associated download device employing identity verification;
Figure 8 is a circuit diagram of the download device of Figure 7;
Figures 9(a) and (b) illustrate alternative identification inputs to the download device from the camera;
Figure 10 is a flow chart illustrating the verification function;
Figure 11 is a schematic diagram of camera and download device components implementing a camera identifier;
Figure 12 is a schematic diagram of a system incorporating a download device communicating via the Internet with a control centre;
Figure 13 is a schematic diagram of an alternative system employing communication by telephone line;
Figure 14 is a schematic diagram of a system incorporating communication using a dial tone technique;
Figure 15 is a schematic diagram of a system incorporating wireless communication; and
Figure 16 is a flow chart illustrating camera reactivation.

### Detailed Description of the Preferred Embodiment

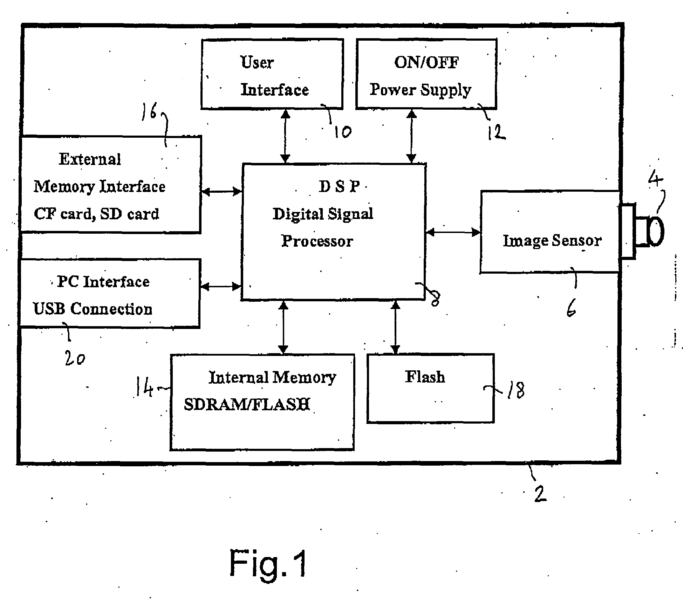

Conventional digital cameras include a number of basic system components and/or circuits, as illustrated in Figure 1. The camera incorporates a light-tight housing 2 having a lens 4 which focuses light onto an image capturing sensor 6 such as a charge coupled device (CCD). A main processing unit referred to as a digital signal processor (DSP) 8 controls the main camera functions. A user interface 10 comprises a display screen for displaying the view seen by the camera, for displaying pictures already taken and details of camera settings and functions, and further including a plurality of control buttons including a shutter button. A power supply 12 provides power to the camera. Internal camera memory (eg SDRAM, flash memory) is provided, as indicated 14, whilst an external or removable memory 16 (eg SD or Compact Flash CF card) is additionally provided onto which the images are stored. A flash unit and control circuitry therefor is provided, as indicated at 18. A PC interface 20 is provided, allowing external connection of the camera, generally via a connection of standard configuration such as a universal serial bus connection, and allowing downloading of images from the camera to an external computing device such as a PC, printer and/or other storage devices.

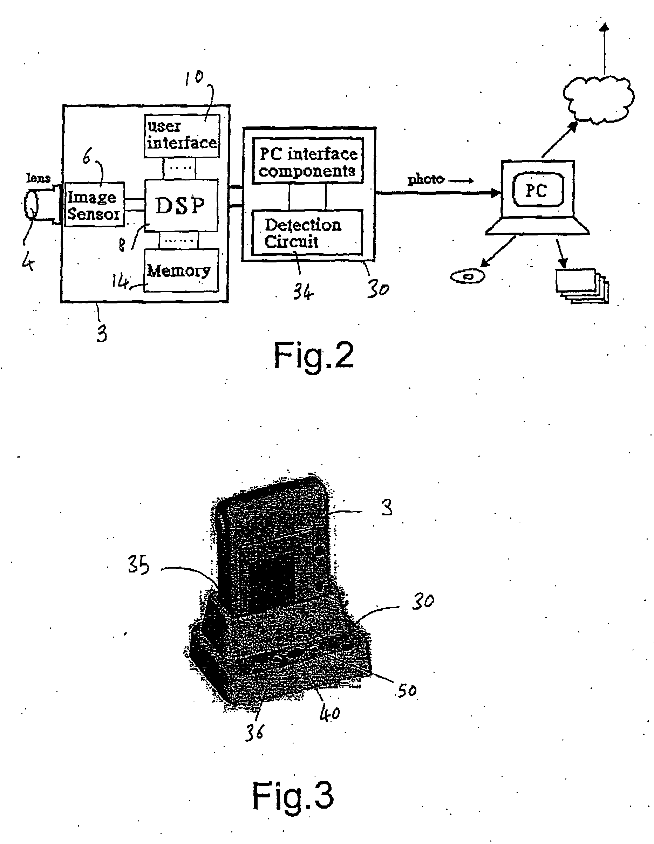

The digital camera and associated components according to an aspect of the invention are illustrated in outline in Figure 2. In contrast to conventional digital cameras the camera indicated 3 is devoid of conventional connection means to allow image retrieval, and may be connected only to a dedicated download device 30. It is envisaged that the download device 30 will be provided at a processing entity, such as a photo shop, photo lab or mini-lab, so that the user must bring the camera to this entity for retrieval of the images therein. This entity may be the entity from which the camera was initially purchased, or an entity related to or authorized by the entity selling the camera. The download device 30 itself is connected to computing means which might be a personal computer (PC), or a dedicated processing station at which either the personnel at the processing entity, or even the individual user make selections as to which images are to be kept and in what format, for example printed to photographic paper, copied to a storage medium such as a CD, DVD, SD card or similar, and/or sent by email to a specified email address. The user and/or processing personnel might also make a variety of image manipulations, cropping pictures, enlarging or employing a variety of other processing techniques or special effects. As discussed further below, it may be arranged that after downloading of images the camera 3 is deactivated, and further pictures cannot be taken until reactivation. The camera 3 is retained by the processing entity and returned to the manufacturer for re-checking, re-packaging and camera reactivation.

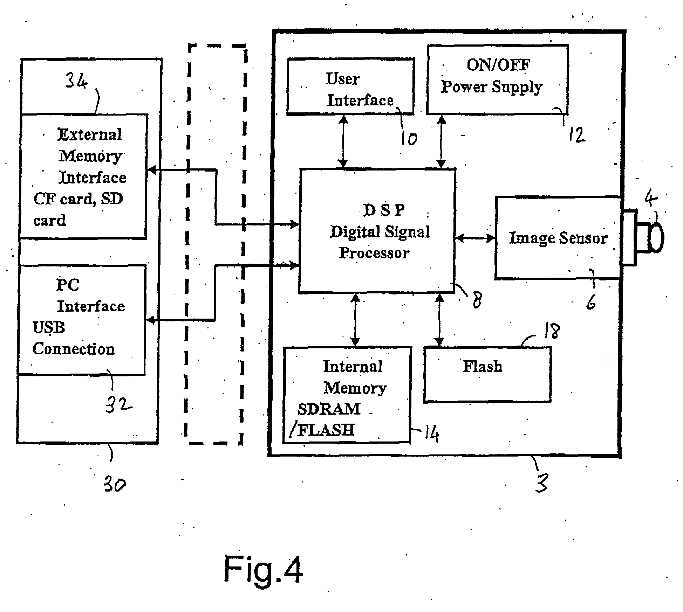

More particularly, the digital camera indicated 3 utilizes many of the components of the conventional camera as discussed above, which components are illustrated in Figure 4 with like reference numerals. However, in contrast to conventional digital cameras, those components associated with full interfacing of the camera with other devices such as a PC and/or external memory are omitted or are provided in an incomplete manner, and instead these are incorporated into the external download device 30, such device 30 being essential for interfacing of the camera with any other device, and hence for retrieval of the photographs stored therein. The PC interface is indicated 32 in Figure 4. Similarly, the interface with external memory such as SD or CF cards is omitted from the camera and incorporated into the download device, as indicated 34. Whilst both a PC interface 32 and external memory interface 34 are provided, in a simpler version one or other could be omitted from the download device 30.

Although the camera 3 includes connection means for connecting to the download device, in the form of a series of pins, sockets or contacts, the connection does not constitute a true interface or complete interface in that even if the data-carrying pins could be identified one could not simply make direct connection of these to a PC or storage media.

Once the camera's image storing memory is full, the camera is returned by the user to the processing entity. At the processing entity the camera 3 is connected to the download device 30, which comprises a camera-receiving cradle, as can be seen in Figure 3, the housing thereof defining an appropriate recess 35 into which the camera 3 can be received such that the series of connecting pins, sockets or contacts on the camera makes electrical contact with an appropriate series of pins, sockets or contacts within the recess 35. The layout of the connection is preferably proprietary and non-standard, such that the camera 3 can be connected only to the dedicated download device 30. It may also be arranged that a larger number of pins, sockets or contacts are provided than are actually used, for example 20 pins might be provided, with several of these being redundant.

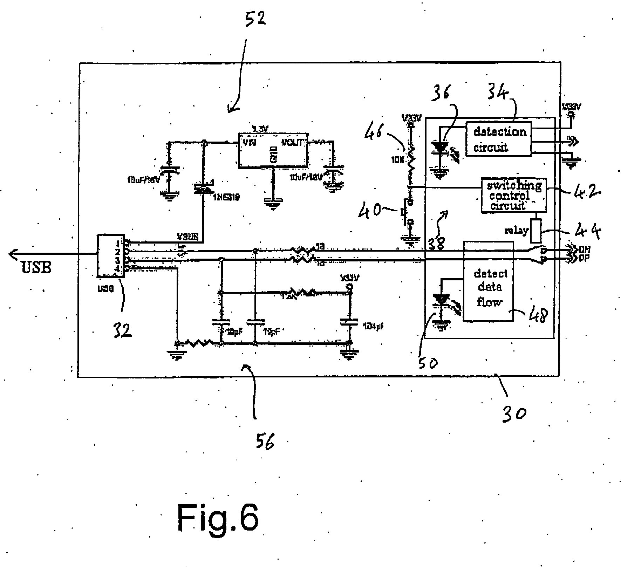

Turning to Figure 6, the main operative components of the download device 30 are illustrated. The download device 30 incorporates a connector which, as discussed above, is of non-proprietary configuration, providing electrical connection to the camera 3. Only a few of the pin connections are here illustrated, at the right hand side of the Figure 6, including in particular the data-related pins, DN and DP, as discussed further below. The output of the download device 30, illustrated at the left hand side of the device includes an output connector indicated 32 preferably of a standard type such as a USB port, allowing easy connection to computing means such as a PC, or printer or other electronic device.

Incorporated in the download device is a detection circuit 34 which incorporates a processor to conduct an internal check for every contact or specific connections of the download device/camera connection, being arranged to check the integrity of electrical connection and to output a visual indication through LED 36 when proper connection is made of all the contacts or specific contacts.

A switching control element indicated 38 includes a user-activatable switch 40, such as a simple button switch, and a control circuit 42 which controls a relay 44 which acts to make and break connection on data lines (indicated DN and DP). Resistor 46 provides a potential division from a 3.3v supply. A data detection circuit 48 is provided to detect and provide a visible indication of data flow "in process", through illumination of an LED 50.

A power circuit 52 receives a voltage through a pin 1 of the connector 32, typically at 5V, and reduces this to a stabilized 3.3V for supply to the detection circuit and elsewhere within the download device. Voltage stabilizing of the data lines is effected by the circuit 56, in known manner, through an impedance matching technique. This provides for stability of data transfer.

In operation, at the processing entity ("mini-lab" etc) the camera 3 is connected to the cradle of the download device 30. The detection circuit 34 detects the integrity of electrical connection and activates LED 36 when the connection is made. The operator manually initiates the download sequence through switching of the switch 40, with the image data being transmitted via the USB connector 32 to an attached computer, printer, separate storage device or other electronic device. The downloading process is indicated by the LED 50, which extinguishes on completion. The pictures can then be returned to the user, in electronic form, for example on CD-ROM or DVD, or by email, and/or in a hard copy form as desired.

As indicated in Figure 4, the download device 30 may itself have a conventional interface to an external storage medium such as an SD card or CF card built in. Although it is preferred that the download device 30 will include both a PC interface 32 and card interface, the device 30 might include only one or other interfaces.

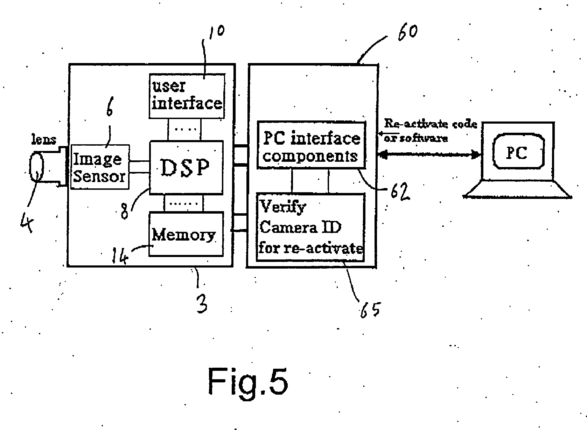

The camera 3 is adapted, through programming or operational control by the DSP such that on download of images it is deactivated and remains so until appropriate reactivation, by means of supply to the camera of a reactivation program, code or "key". This reactivation is preferably effected at the factory, to which all the used cameras are sent from all the various processing entities, mini-labs etc, utilizing a dedicated reactivation device, as indicated 60 in Figure 5. The reactivation device 60 incorporates in a similar manner to the download device 30, a USB or other standard connection to a PC or other computing means and associated interface components, indicated 62 including voltage supply, and stabilizing circuits. A proprietary connection is provided between the reactivation device 60 and camera 3 (for example a 20-pin connection as mentioned above). A detection circuit similar to circuit 34 may be used to ensure that a proper connection is made between device 60 and camera 3. On reactivation the device 60 initiates an upload of a small piece of software or data or a code from the PC to effect reactivation of the camera 3. This is discussed further below.

For the purposes of operating a successful business model utilizing the camera and associated components as described above, and in particular whereby the camera may be sold near or even below its cost price and must be returned to a particular processing entity for image downloading followed by return of the camera to the manufacturer, it is highly desirable to be able to monitor and control as far as possible the return of cameras to the processing entity, and from there to the factory. Moreover, it is desirable that the camera manufacturer be able to monitor instances of the downloading of images and hence receipt of cameras from end users, so that these can be compared to records of returned cameras.

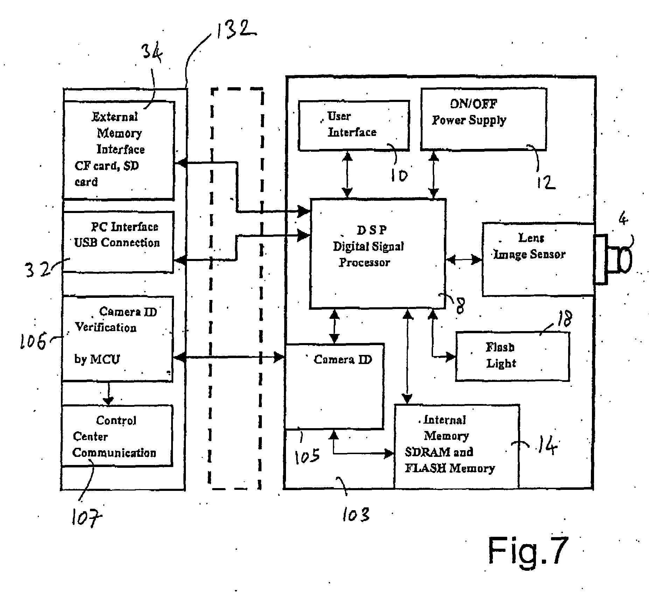

Figure 7, illustrates a second embodiment of a camera and associated download device incorporating means allowing camera verification and/or identification at a processing entity. The camera indicated 103 includes all the components of that of the first embodiment as illustrated in Figure 4, with like reference numerals indicating like parts. In addition, the camera 103 is provided with means indicated 105 for identifying the camera in the form of an identification code or similar. The download device 132 includes means 106 for verifying that the camera 103 is authorized to be returned to that particular download device. For example, the camera ID may be a code identifying a particular processing entity from where the camera was purchased. Alternatively, the camera ID may be a unique identifier accorded to the particular camera. The download device also includes means indicated 107 for sending information about the downloading of images, such as a log of download events and/or information as to particular cameras, identified through their ID's to a control centre, which may be at the manufacturer, or may be an entity reporting to the manufacturer. It will be appreciated that a variety of techniques for verifying a particular camera is authorized to be used with a particular download device might be employed; for example, the camera might have a serial number, or code stored therein, provided on manufacture, or might be programmed to output a identifying signal, in either digital or analogue form, or any combination of the above. The camera ID might be stored in a read only memory (ROM) for example in the DSP 8, or in the internal memory 14, or in a dedicated non-volatile memory, such as an EEPROM or one time PROM. Alternatively, in a hardware embodiment an ID circuit might be utilized to provide an identifying signal.

As illustrated, the download device 132 incorporates means 106 for receiving the camera ID and verifying whether this meets particular designated criteria. Preferably, a controller such as an MCU carries out the verification process. For example, if the camera ID is a serial number or code, the MCU may include a stored list of authorized serial numbers or codes, for example in a look-up table, the download device 132 only being enabled if there is matching of the serial numbers or codes.

Although Figure 7 illustrates the camera ID verification means 106 within the download device, this might alternatively be provided as a program run on external computing means such as a PC connected to the download device 132.

As a further alternative the verification process can be effected by a program or other control within the camera.

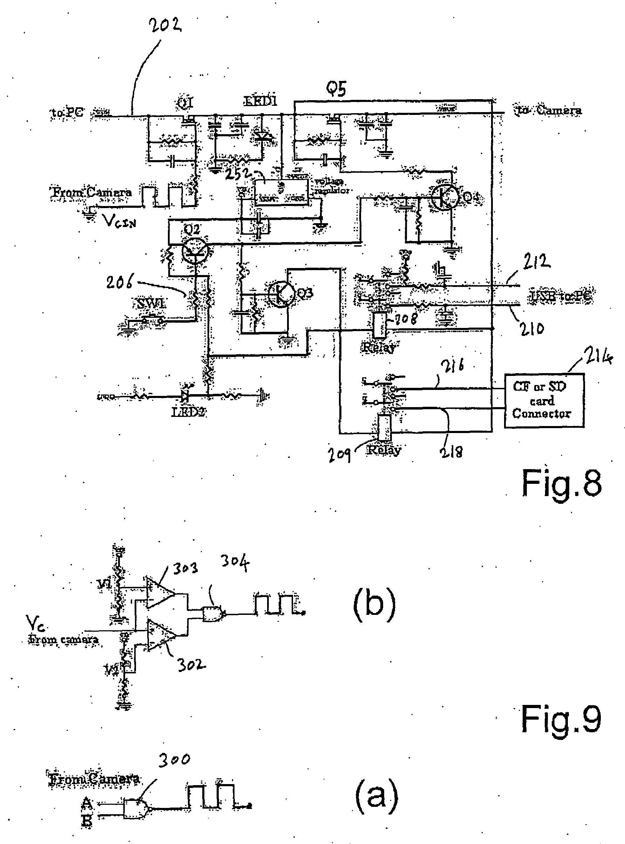

Figure 8 is a circuit diagram illustrating the main operative components of an embodiment of the download device 132 employing a simple form of camera ID verification. The identifying input from the camera is indicated V_{CIN} and has one of two possible states, a HIGH or LOW state. Uppermost in the figure the circuit includes voltage bus 202 which connects to a voltage pin of the USB connection to the PC, typically at +5V, power regulation integrated circuit 252 connected thereto, outputting a +3.3V stabilized supply. The bus 202 incorporates switching MOSFET Q1 which is responsive to the signal input V_{CIN} from the camera, and switching MOSFET Q5 as discussed further below. LED 1 connected between line 202 and ground provides a visible indication of connection of the camera to the download device. The circuit includes a pair of relays 208, 209 which respectively control connection from data output pins in the camera to a PC via lines 210, 212 and a USB port, and from the data output pins to an external memory connector such as a card slot 214, via lines 216, 218. User-operable switch SW1 is connected between ground, and through resistor 206 to the base of transistor Q1, such that closing of the switch SW1 pulls the base to a LOW signal, forward biases the V_{be} of transistor Q2, turning transistor Q2 ON to apply a HIGH signal to Q2's collector and to the base of transistor Q4, turning Q4 ON pulling the collector voltage of Q4 to a LOW signal and closing the MOSFET switch Q5 connected thereto. With Q5 closed the camera is powered with the +5V supply. In this manner the camera's input signal V_{CIN} is being "verified" by the circuit, activating the camera power on such verification. The HIGH signal at Q2's collector and low at the base are connected to the base and collector respectively of Q3 which is turned ON. In this condition the voltage drop across the relays 208 and 209 are sufficient to activate the relays to close the data connections such that data is transmitted on the two data lines 210, 212 from the camera through the download device to the USB connection and to the PC, and via lines 216, 218 to card slot 214. The LED 2 provides a visible indication of the voltage condition closing the relays, and hence an indication of data transmission. With Q3 on the collector of Q3 and base of Q2 are maintained in a LOW condition, keeping Q2 ON, and the voltage across the relays sufficient to keep the lines connected.

As noted, Figure 8 illustrates a very simple verification technique where only a single HIGH signal from the camera is used to control the activation of the download device. It will be appreciated that an identifying signal from the camera may involve detection on several signal lines from the camera. For example, Figure 9(a) shows two signal lines A and B from the camera, with a simple logic AND gate 300 used to provide a control output for switching MOSFET Q1 when a particular logic condition is satisfied. It will be appreciated that the use of additional logic gates and signal lines from the camera can be used to construct a more complex verification.

Figure 9(b) illustrates use of an analogue technique, utilizing a pair of differential amplifiers 302, 303 and an AND gate 304 such that the incoming signal V_{c} is "verified" if lower than V₁ and higher than V₂.

It will be appreciated that it is possible to increase the complexity of the input signal and requisite verification. For example, a complex analogue signal could be utilized, with an analogue to digital converter (ADC) in the camera and digital to analogue converter (DAC) in the download device.

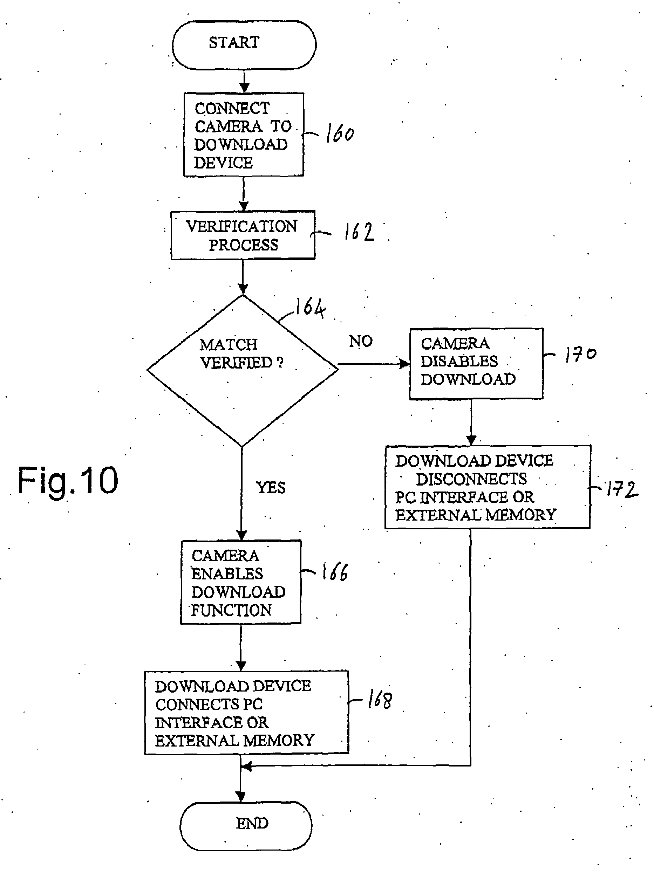

Figure 10 illustrates the verification and download process. The camera 103 and download device 132 are connected at step 160. The verification process is operated at 162, to check that the camera is authorized to be used with the download device, step 164. If verified, the camera 103 enables the download function 166, and the download device receiving image data which is connected to the PC via the PC interface 32, and/or to an external memory 34. If the camera 103 is not verified as authorized, the camera 103 disables the download function 170, and disables the PC interface 32 and/or external memory 34, at step 172.

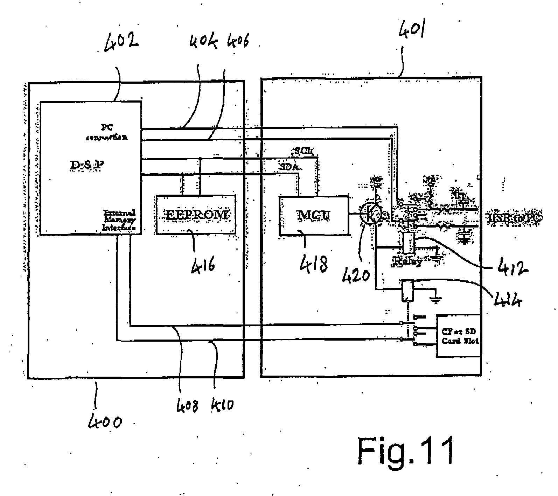

Figure 11 illustrates certain components of a further embodiment of a camera and download device using serial number technique for camera verification. As discussed above, in one version the camera may be provided with an identification serial number stored therein. This may be a number which identifies cameras sold by and to be processed by a particular entity, and/or it may be a unique code which identifies uniquely the individual camera; for example, the number may have particular fields identifying the selling/processing entity, and fields uniquely identifying the particular camera. Uniquely identifying the particular camera allows the processing entity or manufacturer which re-fits the returned camera to monitor the number of times the camera has been used. It might be arranged for example that particular components are replaced after a specified number of usages, or the camera completely discarded.

Figure 11 shows a camera 400 and download device 401, the camera being provided with a digital signal processor (DSP) 402. A memory such as an EEPROM 416 stores the camera serial number and other appropriate data. An MCU 418 in the download device acts as a verification device, receiving signals via IIC bus using two signal lines SCL (clock) and SDA (data) from the DSP. The MCU 418 controls through switching of transistor 420 the operation of the relay 412, 414 which thereby serves to control connection and disconnection of the data lines connected to the download device USB port and/or card slot, in a manner similar to that of the Figure 8 embodiment.

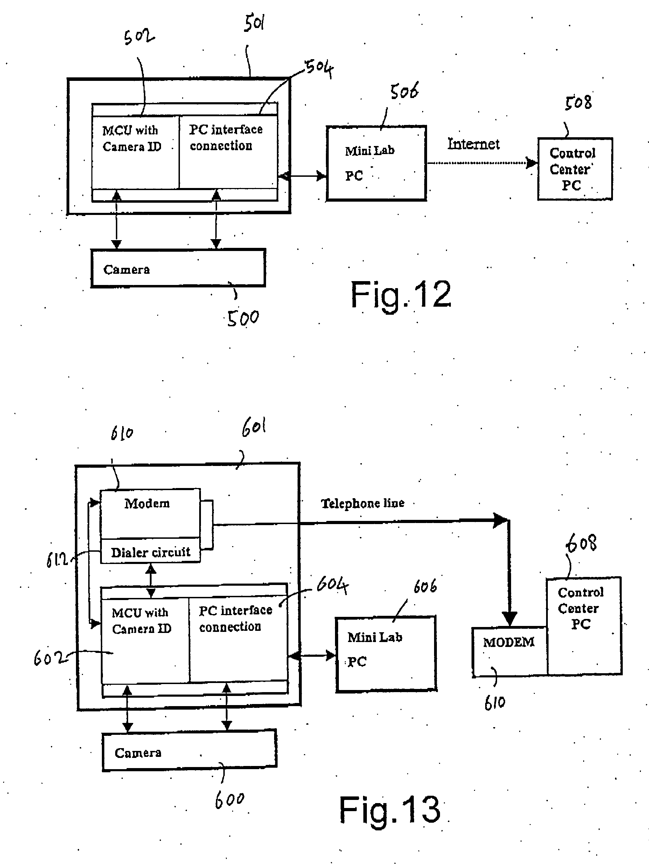

As discussed above, in order to monitor and control the return of cameras from the processing entity back to the manufacturer the download device may be provided with functionality for automatic logging and dispatch of data to a control centre. Such data may include the time/date of download, camera ID, the number of times the camera has downloaded images, a code identifying the processing entity, a code identifying the particular download device used and other pertinent data. Figure 12 shows schematically a system employing a download device 501 to which the camera 500 is connected as described above. The download device 501 includes an MCU 502 which receives a camera ID and communicates this and other pertinent data via the PC connection 504 to a computer at the processing entity, for example to a mini-lab's PC. This in turn sends the data, and possibly other relevant data to a remote control centre operated by or reporting to the manufacturer, through the Internet, for example by upload to a website of the control centre. This data can be used to verify that all the cameras from which images are downloaded are returned to the manufacturer, or at least that there is a satisfactory return rate.

Figure 13 illustrates schematically a system employing communication by telephone line to the control centre. A camera 600 is connected to the download device 601. The download device 601 is provided with MCU 602 and PC interface 604. The MCU 602 controls communication with the control centre 608 via modem 610 and appropriate dialling circuit 612, by telephone line to the remote control centre 508 which receives and processes the data.

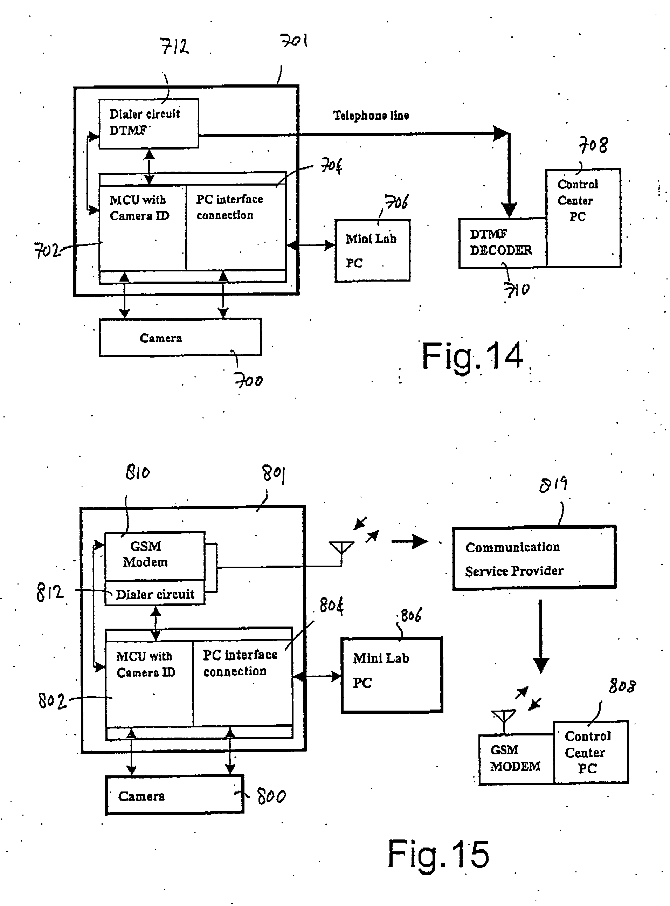

Figure 14 illustrates a system similar to that of Figure 13 but where the communication is by use of a dual tone multi-frequency (DTMF) technique, The MCU 702 controls dispatch of the data by telephone line where the dialler is converted into a DTMF signal string in DTMF dialler 712. The control centre includes a DTMF decoder 710 which decodes the data, for the control centre PC 708. It will be appreciated that other coding techniques might be utilized such as frequency shift keying (FSK) or phase shift keying (PSK) .

Figure 15 illustrates a system similar to that of Figure 13, but using wireless telephony, with the download device 801 provided with a GSM engine with modem 810 and dialler 812, communicating with the control centre 808 via the GSM network provider 809. The systems of Figures 15 and 13 lend themselves particularly to use of short message service (SMS) messages for carrying the data.

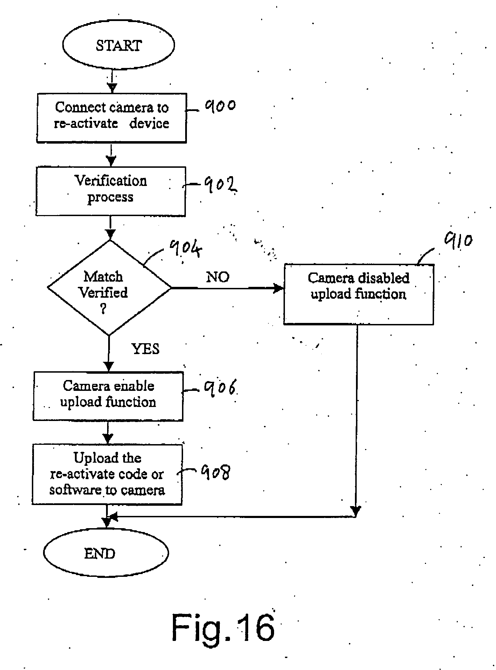

After downloading of image data at the processing entity internal control effected by the camera's DSP is employed to erase the image data from the camera memory. This may be arranged to occur sequentially after each image is downloaded, or at the end of the download process. After complete download, the camera is internally de-activated. This may be achieved by effecting erasure of an internal code or piece of software from the camera, without which the camera cannot operate. The camera is then returned from the processing entity to the manufacturer for testing, repair and re-packaging. The camera must then be reactivated, preferably by the manufacturer, but alternatively subject to appropriate controls, by the processing entity or even the end user themselves. As illustrated in Figure 5 the reactivation requires use of a reactivation device indicated 60. This device 60 comprises a unit having proprietary connections to the camera, and including an interface for connection to a PC such as a standard USB connection. The device 60 may also include means 65 for effecting a camera ID verification, in a similar manner to the verification between cameras and download devices described above. Although not necessary where the reactivation occurs at the manufacturer, the verification means 65 may be especially useful where the reactivation device is supplied instead to any other entity, such as the processing entity or even the individual end user of the camera. Figure 16 illustrates a reactivation process employing a verification procedure. As indicated at 900 the camera is connected to the reactivation device 60. A verification procedure 902 is effected wherein a camera ID is received by the device 60 and provided it meets criteria set by the verification means 65 the camera is enabled, as indicated 904. For example, exactly as with the verification check between download device and camera ID may be a simple signal on a particular pin, a complex signal on a plurality of pins, or a stored serial number or code. Assuming a match is verified the camera is enabled 906 so that a reactivate code or piece of software can be uploaded to the camera 908, returning the full functionality of the camera. If no match is verified however, the camera remains disabled 910.

This verification procedure ensures that the reactivation device 60 is being used to reactivate only a camera or cameras for which it is authorized to do so.

Alternatively, the reactivation procedure can be arranged to run within the camera, with a check that the identity of camera and reactivation devices match.

In a further embodiment, the reactivation device and download device functions could be incorporated into a single unit.

Although it is envisaged that the requirement for use of the separate download device and reactivation device operated by different entities renders the camera a "single-use" type, both the devices could alternatively be supplied to an end user for use with the user's particular camera, as identified by its ID. The verification procedures ensure that the user can utilize the devices only with his own camera. The camera is then not returned to any other entity for downloading, or reactivation, and becomes "multi-use".

## Claims

1. A digital camera comprising memory means for storing image data and connection means for connection of the camera to a download device for downloading the image data from the memory means, wherein the camera is free of any connection interface allowing connection to external computing means or computer peripheral device.

2. A digital camera according to claim 1 wherein the camera is free of any connection interface to external digital storage media.

3. A digital camera according to claim 1 or 2 wherein the connection means is a non-standard dedicated connection.

4. A digital camera according to claim 1, 2 or 3 further comprising a stored communication code or signal.

5. A digital camera according to any preceding claim, in combination with a separate download device to which the camera is connectable through said connection means, the download device comprising connection interface means whereby the download device can be connected to external computing means or computer peripheral device.

6. A digital camera in combination with a download device according to claim 5 wherein the interface means comprise a connecting port of a standard configuration.

7. A digital camera in combination with a download device according to claim 5 or 6 wherein the interface means comprise a universal serial bus (USB) port, including at least two data line connections, and two power connections.

8. A digital camera in combination with a download device according to any one of claims 5 or 7 wherein the connection interface of the download device includes a voltage stabilizing circuit connected to data lines therein.

9. A digital camera in combination with a download device according to any one of claims 5 to 8 wherein the connection interface of the download device includes a stablized power supply circuit.

10. A digital camera in combination with a download device according to any one of claims 5 to 9 wherein the download device further comprises a detection circuit to detect the integrity of electrical connection within the connection means between the camera and download device.

11. A digital camera in combination with a download device according to claim 10 wherein said detection circuit includes visual indicating means to indicate to a user that proper electrical connection is made.

12. A digital camera in combination with a download device according to any one of claims 5 to 11 wherein the download device further comprises user operable switching means connected to the data lines to connect said lines to allow data transfer.

13. A digital camera in combination with a download device according to any one of claims 5 to 12 wherein the download device further comprises a data flow detection circuit to detect the presence of data-carrying signals on the data lines.

14. A digital camera in combination with a download device according to claim 13 wherein the data flow detection circuit comprises second visual indicating means, indicating to a user the presence of data-carrying signals on the data lines.

15. A digital camera in combination with a download device according to any one of claims 5 to 14, the download device further comprising verification means adapted to verify whether the camera is authorized to be used with the download device.

16. A digital camera in combination with a download device according to claim 15 wherein the verification means comprises a verification circuit in said download device which on interconnection with said camera receives an identification signal from the camera.

17. A digital camera in combination with a download device according to claim 16 wherein the verification circuit enables the download device on receipt of a valid identification signal.

18. A digital camera in combination with a download device according to claim 16 or 17 wherein the verification circuit includes one or more logic gates adapted to receive the identification signal and output an activating signal or voltage when the identification signal satisfies the criteria of the logic gates.

19. A digital camera in combination with a download device according to claim 16 or 17 wherein the verification circuit includes voltage detection means to output an activating signal or voltage when the identification signal has a voltage lying within a predefined range.

20. A digital camera in combination with a download device according to claim 16 or 17 wherein the identification signal comprises an identification code stored in the camera, the download device including stored authorized codes with which the identification code is compared.

21. A digital camera in combination with a download device according to any one of claims 5 to 20 wherein the download device is adapted to provide data relating to download events, and further comprises transmission means to transmit said data to a remote control centre.

22. A digital camera in combination with a download device according to claim 21 wherein said data relating to download events comprises one or more of time and/or date of download, camera identification information, download device identification information.

23. A digital camera in combination with a download device according to claim 21 wherein the transmission means is adapted to transmit said data via a telephone line.

24. A digital camera in combination with a download device according to claim 23 wherein the transmission means includes a dual tone multi-frequency encoder with said data being transmitted in such encoded form to the control centre.

25. A digital camera in combination with a download device according to claim 21 wherein the transmission means is adapted to transmit said data to said control device via a mobile telephone network.

26. A digital camera according to any one of claims 1 to 4 wherein the camera is adapted to be deactivated subsequent to the download of image data.

27. A digital camera according to any one of claims 1 to 4 or 26 wherein the camera programming requires the presence of an activating code or program for camera functioning, which code or program is erased on image downloading.

28. A digital camera according to any one of claims 1 to 4, 26 or 27 in combination with a camera reactivating device connectable to the camera through said connection means, for transmitting a camera-reactivating code or program to the camera.

29. A digital camera in combination with a reactivating device according to claim 28 wherein the camera reactivating device includes interface means allowing connection to external computing means from which a reactivating program or code is transmitted.

30. A digital camera in combination with a reactivating device according to claim 28 or 29 wherein the interface means comprises a universal serial bus (USB) port.

31. A digital camera in combination with a reactivating device according to any one of claims 28 to 30 further comprising a detection circuit to detect the integrity of electrical connection between the camera and reactivating device.

32. A digital camera in combination with a reactivating device according to any one of claims 28 to 31 wherein the camera includes identification means, and wherein the reactivating device further comprises verification means to verify that the device is authorized to be used with the camera.

33. A digital camera system including a digital camera and having camera identification means, a dedicated download device comprising verification means adapted to verify whether the camera is authorized to be used with the download device.

34. A download device for connection to a digital camera for the downloading of image data therefrom, the download device including camera verification means for receiving an identification code or signal from a camera and verifying whether the device is authorized to download images from a camera connected thereto.

35. A reactivation device for connection to a digital camera for the uploading of a reactivating code or programs to the camera and where the camera includes an identification means the reactivation device further comprising verification means for verifying whether the reactivation device is authorized to be used with a camera connected thereto.

36. A method of downloading images from a digital camera using a dedicated download device, the camera including a signal or code identification, the method comprising the steps of:
i) connecting the camera and download device;
ii) receiving the identification code or signal in the download device and enabling download of image data only if the identification code or signal meets a predefined criteria indicative of an authorized combination of camera and device.

37. A method of reactivating a digital camera, which camera includes an activating code or program essential for camera functioning and includes an identification signal or code, the method comprising the steps of:
i) connecting the camera to a dedicated reactivating device;
ii) receiving the identification code or signal in the reactivating device and enabling the upload of a reactivating code or program only if the identification code or signal meets a predefined criteria indicative of an authorized combination of camera and reactivating device.
